# EUROPEAN PATENT SPECIFICATION

(11) **EP 1 226 715 B1**
(45) Date of publication and mention of the grant of the patent: **16.04.2008**
(21) Application number: 00959430.0
(22) Date of filing: 25.08.2000
(51) Int. Cl.: H04N 7/00, H04N 7/16

(54) **VIDEO AND MUSIC DISTRIBUTION SYSTEMS**
SYSTEME ZUM VERTEILEN VON VIDEOS UND MUSIK
SYSTEMES DE DISTRIBUTION DE VIDEOS ET DE MUSIQUE

(30) Priority: 27.08.1999 US 385671; 08.11.1999 US 436281; 30.12.1999 US 476078
(43) Date of publication of application: 31.07.2002
(60) Divisional application: 07104424.2
(73) Proprietor: Ochoa Optics LLC, Las Vegas, NV 89119 (US)
(72) Inventor: HUNTER, Charles, Eric, Hilton Head Island, SC 29928 (US)
(74) Representative: Viering, Jentschura & Partner
(86) International application number: PCT/US2000/023410
(87) International publication number: WO 2001/017242

(56) References cited:
- US-A- 5 311 423
- US-A- 5 550 863
- US-A- 5 557 541
- US-A- 5 619 247
- US-A- 5 654 747

## Description

### Field of the Invention

The invention relates to video and music distribution systems and, more particularly, to systems that blanket transmit video/audio content such as movies and music selections (for example, via satellite downlink transmission) to each customer's computer-based recording, storage and playback system. Customers preselect from a list of available movies, music or other content in advance using an interactive screen selector, and pay for only the video/audio content that is actually viewed or music actually recorded for unlimited playback.

### Description of the Prior Art

Document US 5 619 247 A describes an audio/video pay-per-play system with a cable transmission system by which only audio/video programs according to a predetermined schedule are transmitted.

Document US 5 550 863 A describes a transmission system distributing to a reception system which then transmits requested material over airwave communication channels to a plurality of users.

Widespread home television viewing began in approximately 1950 with broadcast networks transmitting shows on specific, prepublished schedules. This model remained the primary model for television viewing for over thirty years.

Cable, and later direct broadcast satellite, increased the number of channels. But viewers were still subject to programming schedules.

Video cassette recorders offered the prospect of shifting viewing times, provided the end user was one of the thirty percent or less of VCR owners who learned to program their VCR's. Even among those who learned to program their VCR, time shifting via VCR remains subject to properly setting up the timer, assuring the power is in the correct state, assuring that a correct tape is in the VCR, that the tape is not full, that the tape is properly rewound, etc. Thus, for the majority of TV viewers, even at the turn of the century, the TV viewing model has scarcely changed from the mode of 1950.

Video rental stores have provided a sort of "video on demand" subject, of course, to the high cost of video cassette purchases by the rental stores, as well as the high capital outlay for real estate (land and building) and the cost of labor at the stores. Even when a title becomes available through video release, the viewer's ability to watch the show at his chosen time is subject to availability of the video at the store, round-trip transportation to the store and the inevitable problems with late returns, damaged videos, lost videos, etc.

True video-on-demand has been envisioned whereby massive video servers would be positioned in every geographic location to transfer high speed video data streams to the houses of individual viewers at any time a viewer wished to access a particular movie or other content. However, this type of video demand system, after years and billions of dollars of investment, has proven to be too complex and expensive and, therefore, has not been implemented.

A compromise on the video-on-demand concept has been proposed by Replay Networks, Inc. (USA) whereby viewers create their own "replay channels" containing content categorized by, for example, show titles, actor, movie type, etc., with such programming being recorded on hard disks at a local facility and later available for on-demand access by individual viewers. Another type of on-demand video distribution system is described in U.S. Patent No. 5,832,287, whereby video-on-demand and network programming is provided from master file and network program databases through multiple community systems, each of which may serve up to approximately one hundred homes.

Both the Replay Networks, Inc. and the '287 systems have severe limitations in terms of storage capability and customer options.

An interactive viewing system that automatically records selected programs is disclosed in U.S. Patent No. 5,805,763. However, the '763 system simply provides another mechanism for recording television programs. This system attempts to simplify the VCR recording function, but because of its complex nature and limited benefits it has not been implemented.

There is an acute need in the video distribution industry for a system that will provide each individual viewer with ready access to tens of thousands of movies titles, as well as educational programming, network programming, and the like, in a convenient low-cost manner that fully satisfies user demand, while enhancing the economic incentives of content providers to create and distribute an ever expanding offering of movies and other video/audio content.

Current music distribution models have many of the same drawbacks as described above in connection with video distribution. For example, the labor and real estate costs associated with conventional retail music stores add greatly to the retail cost of musical recordings. Also, transportation costs for moving the recordings (e.g., CD's) are significant in both retail store operations and mail order or music "club" operations. Also, like video content providers, music content providers would greatly benefit from a distribution system that makes all of their content -- including older recordingsreadily available at market clearing pricing.

### Summary of the Invention

The present invention provides video and music distribution systems that are beneficial to all involved parties, namely consumers, content providers and data transmission providers. In preferred embodiments, consumers are able to preselect movies for viewing from as many as eight thousand movies or more that are transmitted daily and as many as sixty thousand movies or more transmitted monthly. Customers of the video distribution system utilize a menu driven, graphical user interface with simplified controls that provide movie selection by title, type, category (e.g., comedy new releases from major studios). Video/audio content is transmitted via direct broadcast satellite (DBS) in an encoded VHS resolution format directly to each customer's receiving dish or antenna which is linked to the customer's user station where it is stored on a DVD RAM disc in a multiple disc platter. The movies may then be played at any time desired by the consumer, with the consumer paying for only those movies that are viewed. The movies are encoded to prevent conversion and duplication for play on existing DVD systems. The encoding technology also prevents playback on user stations of the video distribution system in homes that are not current on payments for previous purchases. The encoding system includes a novel time-based encoding technology.

The video distribution system of the present invention offers numerous advantages to consumers. For example, consumers have access to new movie releases at those times dictated by market conditions to be most favorable by the content providers and the distributors, often before the movies would be available at video rental stores. Consumers will pay for a movie only after it has been viewed, not when recorded. Thus, consumers are free to record categories or classes of movies (e.g., new releases) and later make a decision as to which movies to actually view -- paying only for those that are viewed. Consumers may view the videos at any time without restraints related to broadcasting schedules and with no need to visit a video rental store for selection of the movie or returning the movie. There are no late fees. New movie releases will never be "sold out" as they frequently are in existing video rental stores. Another advantage to consumers is the ultimate lower cost occasioned by the system's elimination of the real estate and labor costs associated with existing video rental stores. Because literally thousands of movies are available on a daily/weekly/monthly basis, the video distribution system of the invention provides a much greater selection than any existing video rental store. The invention also provides full access to content for those who live in geographically remote and/or sparsely populated areas that may presently have little or no access to video rental stores. The invention also allows access to videos for families with young children, elderly persons and handicapped persons where theater viewing and round trips to video rental stores are inconvenient, prohibitive or expensive. Each user station utilizes high capacity storage such as DVD RAM for its read/write functions in addition to an operating system that provides greatly simplified on-screen programming. The present invention also provides the ability to update movie pricing at any time, for example on a daily, weekly or monthly basis, so that consumers can choose to view movies at times when content providers offer pricing specials or incentives. When a movie is recorded on a disc, it can be labeled and stored for future play or recorded over (similar to a blank VCR tape). As new movies are recorded and shelved, new or previously used videos can be inserted into the platter for future recording. Video quality is improved over existing video rentals where, in most cases, available tapes have been degraded by previous play.

Content providers (e.g., major studio producers) recognize a very significant benefit in that they receive income every time a movie is played, thereby creating significant residual value for their investments. Importantly, new release movies are always available (i.e., not "sold out") during initial peak demand when pricing power is the highest. The mentioned residual value translates into increased income for the content providers because a significant portion of existing content is available for sale every day -- since thousands of movies are transmitted on a daily/weekly/monthly basis. The invention also allows content providers to change pricing at any time, e.g., daily/weekly/monthly, to optimize price vs. consumer demand. In this regard, content providers are allowed to meet consumer demand for a significant portion of the existing content inventory value every day. This provides an extremely high benefit by effectively allowing the market to clear (i.e., real demand matches supply), something that the current video distribution model (TV, movie channels, pay-per-view and video rental) do not provide.

According to the invention, content providers are confident that they can distribute their movies with extremely high security through the use of appropriate encoding technology. Preferably, the encoding includes time-based encoding technology, with new code keys for every distributed movie transmitted via phone/modem with billing queries every month. Time-based coding, in combination with a single standard proprietary operating system, allows the video distribution system operator to achieve the level of security demanded by content providers.

Transmission providers (DBS satellite system providers, in preferred embodiments) realize the advantage of a significantly increased income base for supporting their services and the utilization of lower cost, off-peak time for transmission of a significant portion of the movies.

In one aspect, the video distribution system of the present invention includes a data transmission system blanket transmitting a plurality of encoded movies to customer households. A user station is provided at each customer household, the user station including means permitting the customer household to preselect desired transmitted movies for recording. A receiver and associated recording device at each customer household is provided for recording preselected movies. A playback device permits each customer to play back those preselected, recorded movies that the customer desires to view. The video distribution system also includes a central controller system having a database for storing therein an address corresponding to each customer household, a communications link between each customer household and the central controller system to verify to the controller unit that a preselected, recorded movie has been played back for viewing and a billing system linked to the central controller system to bill customer households for only those preselected, recorded movies that are played back for viewing.

In another aspect, the invention may be defined as a method of distributing movies to customer households comprising the steps of blanket transmitting a plurality of movies to customer households, permitting each customer household to preselect and record desired movies, permitting each customer household to playback for viewing any preselected, recorded movie, communicating movie playback information from each customer household to a central controller, and billing customer households for only those preselected, recorded movies that are played back for viewing.

In yet another aspect, the invention may be described as a method of distributing music to customer households using the above-described model and wherein customer households are billed for music selections when they are recorded on a medium (e.g., CD) for unlimited playback by the customer.

### Brief Description of the Drawings

Some of the features of the invention having been stated, other features will appear as the description proceeds, when taken in connection with the accompanying drawings, in which

Figure 1 is a schematic representation of a video distribution system of the present invention utilizing satellite downlink data transmission.

Figure 2 illustrates further details of a user station shown in Figure 1.

Figure 2A is a view of the user station of Figure 2 showing several optional features.

Figure 3 shows a hand held infrared remote control for use in association with the user station.

Figure 4 is a block diagram showing components of a representative user station of the invention.

Figures 5-7 show several screens that appear on the display when a customer reviews available movies, preselects movies for viewing and performs other associated functions using the interactive program guide.

Figure 8 illustrates a Level I time-based coding format that provides enhanced security for the transmitted programming.

Figure 9 is a block diagram showing functions of the central controller system.

Figure 10 is a block diagram of one simplified embodiment of a business model for commercializing the video distribution system of the invention.

Figure 11 is a schematic representation of a music distribution system of the invention.

Figure 12 shows another music distribution system wherein the user station includes an Internet browser and processor enabling customers to access the system operator's music Internet site via phone line or Internet connection.

Figure 13 shows yet another music distribution system depicting optional content/programming transmission links.

### Detailed Description of the Invention

While the present invention will be described more fully hereinafter with reference to the accompanying drawings, in which aspects of the preferred manner of practicing the present invention are shown, it is to be understood at the outset of the description which follows that persons of skill in the appropriate arts may modify the invention herein described while still achieving the favorable results of this invention. Accordingly, the description which follows is to be understood as being a broad, teaching disclosure directed to persons of skill in the appropriate arts, and not as limiting upon the present invention.

### 1. The Overall Video Distribution System, Generally

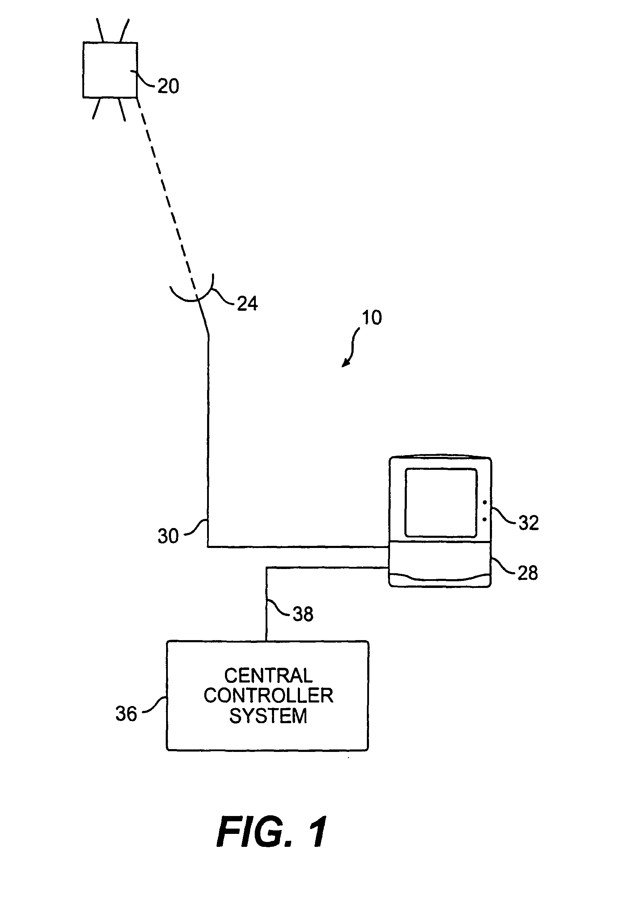

Referring to Figure 1, there is shown a simple schematic of one embodiment of a video distribution system 10 of the invention. System 10 utilizes direct broadcast satellite (DBS) transmission via satellite 20 as the means for blanket transmitting encoded programming data, either in real time or in time compressed format (discussed below). The program data is received at each customer household by a receiving antenna or dish 24. Dish 24 is linked to a dedicated user station 28 by a satellite receiver link 30. User station 28 is an interactive device permitting customers to preselect desired transmitted movies, record the preselected movies and play back the recorded movies on a video display device (e.g., television 32) anytime the customer wishes to view them. Station 28 communicates at appropriate times with a central controller system 36 via a phone/modem connection 38 (land, Internet or cellular). Central controller system 36 stores a discrete address (e.g., telephone number, credit card number or billing address) for each customer household and receives information via connection 38 to verify that a preselected, recorded movie has been played back for viewing. Central controller system 36 utilizes the movie playback information to bill customer households and also to credit the accounts of content providers. The satellite link (or alternatively the central controller system 36) periodically communicates with each customer household to provide information on available movies and when they will be transmitted, along with pricing information for the playback of specific movies or categories of movies. In preferred embodiments, the satellite link and phone/modem connection 38 transmit time-based code keys for the transmitted movies that form part of the security system for the video distribution system.

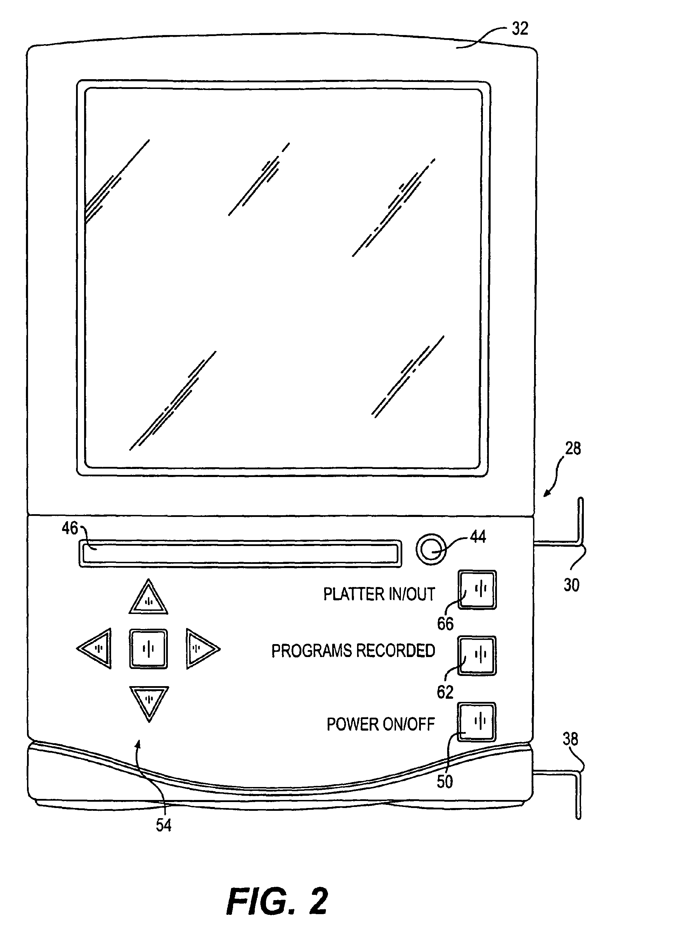

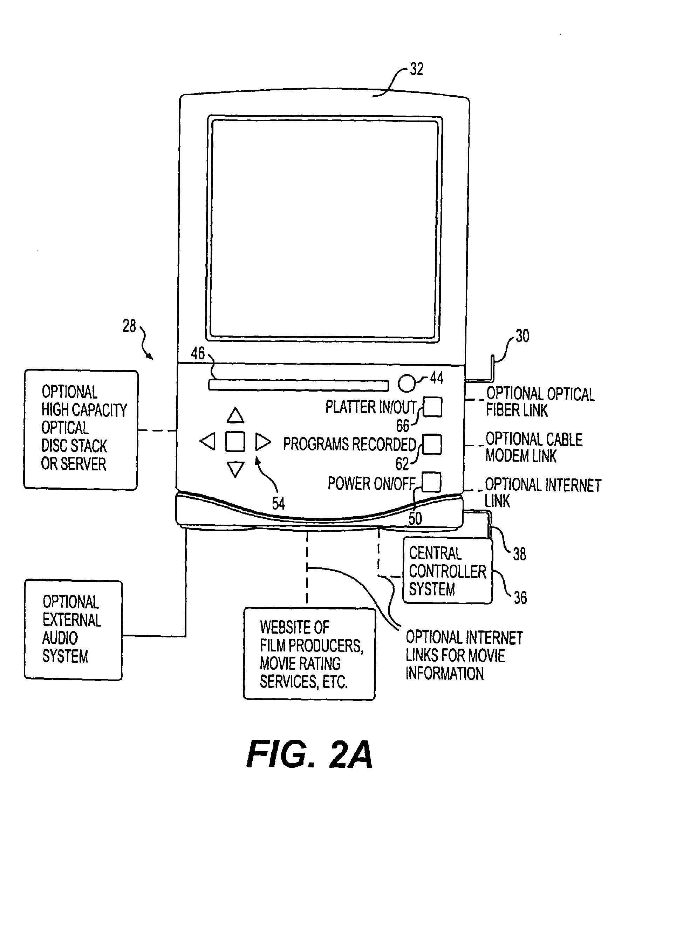

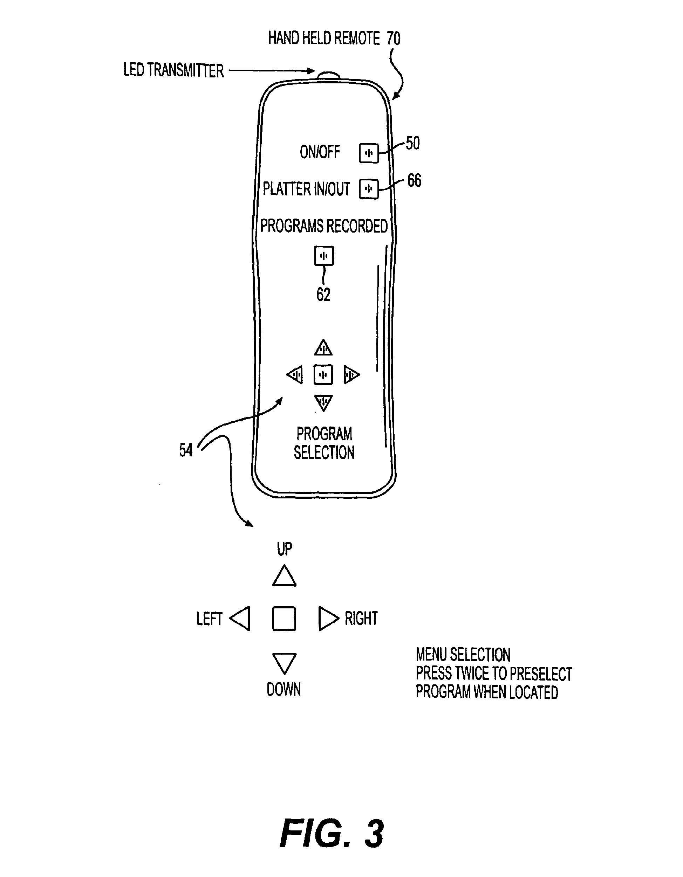

Figure 2 illustrates the front panel of one embodiment of user station 28. Station 28 includes a port for the satellite receiver link 30, a phone/modem connection 38, a remote infrared sensor 44 and a DVD RAM platter 46 (e.g., a 10-disc platter) which is utilized as the write/read mechanism for recording and playback of movies or other content. User station 28 also includes a user interface comprising a power on/off switch 50, a five key program selector 54, a "Programs Recorded" key 62 and a platter out/in key 66, all of which preferably are duplicated on an infrared handheld remote 70 (Figure 3). A more detailed discussion of the use of user station 28 to review movie availability, to preselect, record and playback movies will be set forth below in the description of the viewer interface and interactive program guide.

### 2. The Satellite(s)

According to preferred embodiments of the present invention, data transmission is achieved utilizing geostationary satellites operating in the KU band that are downlinked to conventional receiving antennae or dishes located at the customer households, which are in turn linked to TV Receive Only (TVRO) units connected the customer user stations.

Following the recent acquisition of PrimeStar's assets by Hughes, there are now two digital broadcast satellite providers in the United States, Hughes (DSS) and EchoStar (DISH Network). EchoStar's DISH network launched an additional satellite in September 1999 (its fifth satellite) that, in combination with its previous satellites, provides continuous transmission of greater than five hundred channels to substantially the entire continental United States. EchoStar now has satellites located in the 119, 110, 61.5 and 148 positions within the Clark Belt.

With the above satellite orientations, EchoStar's new "DISH 500" system utilizes an elliptical twenty inch antenna or dish containing two LMBS heads that can receive information from two different satellites simultaneously. As mentioned above, this system permits greater than five hundred channels to be directly broadcast to each customer household.

Currently preferred embodiments of the present invention utilize the EchoStar system, most preferably the DISH 500 system, for programming data transmission at either real time or time-compressed transmission rates, discussed below. In alternative embodiments, the invention may be implemented utilizing the Hughes (DSS) system, or a combination of both the Hughes and EchoStar systems (resulting in a relatively smaller portion of each system's total capacity being devoted to the invention's video distribution).

### 3. Data Transmission Parameters

EchoStar's DISH 500 system has 480 X 704 resolution, providing a very high band width of approximately 4 megabits/sec for each channel, for a total transmission capacity of approximately 2000 megabits/sec for five hundred channels.

As mentioned above, in accordance with certain preferred embodiments of the invention the video content (e.g., movies) may be broadcast at standard VHS resolution (240 X 352) which translates into a requirement of approximately 1.3 megabits/sec per channel with MPEG II compression. Thus, the full (greater than 2000 megabits/sec) capability of the DISH 500 system translates into the capability to broadcast approximately 1,530 movies simultaneously in real time (i.e., not time compressed). At 110 minutes per movie, the full twenty-four hour capacity is approximately 20,000 movies per day, far greater than total requirements for the video distribution system of the invention.

Thus, according to this aspect of the invention, a portion of the total transmission capability of the DISH 500 system may be utilized to blanket transmit thousands of movies for preselection and recording by customers. In this regard, and as discussed in more detail in the Examples below, new release movies (e.g., the 100 most popular new release movies from major studios) may be transmitted several times per day with concentration before and during prime evening viewing periods, with a second tier of popular movies transmitted less often, but still at least daily, and third and fourth tiers of movies transmitted weekly/monthly -- all in accordance with content listings and transmission schedules available to customers through their periodically updated electronic program guide.

It will be appreciated that instead of using more typical 120 watt DBS transponders, implementation of the present invention may be carried out with higher power transponders (e.g., 240 watt transponders) to increase the effective transponder capacity (e.g., from 23 megabits/sec to 30 megabits/sec) by reducing much of the capacity allotted for forward error correction and system management inherent in lower power transponders. Also, along with the use of higher power transponders, the invention may be carried out with quanternary (QPSK) polarization to double the effective bit transfer rate for each transponder over that which may be obtained by using current orthogonal polarization -- with a sacrifice in bit error rate that is acceptable for those applications of the invention where lower video and audio resolution is not an important consideration to the customer. Thus, the use of high power transponders (e.g., 240 watts or higher) in conjunction with higher level polarization (e.g., quanternary) permits video distribution systems of the invention to be implemented utilizing less of the DBS system's total transmission capacity, permits the transmission of a greater number of movies or other content, permits more frequent transmission of high demand (e.g., Tier 1) movies and permits greater time compression of movies, or a combination of the above, all to the benefit of consumers.

### 4. User Station Details

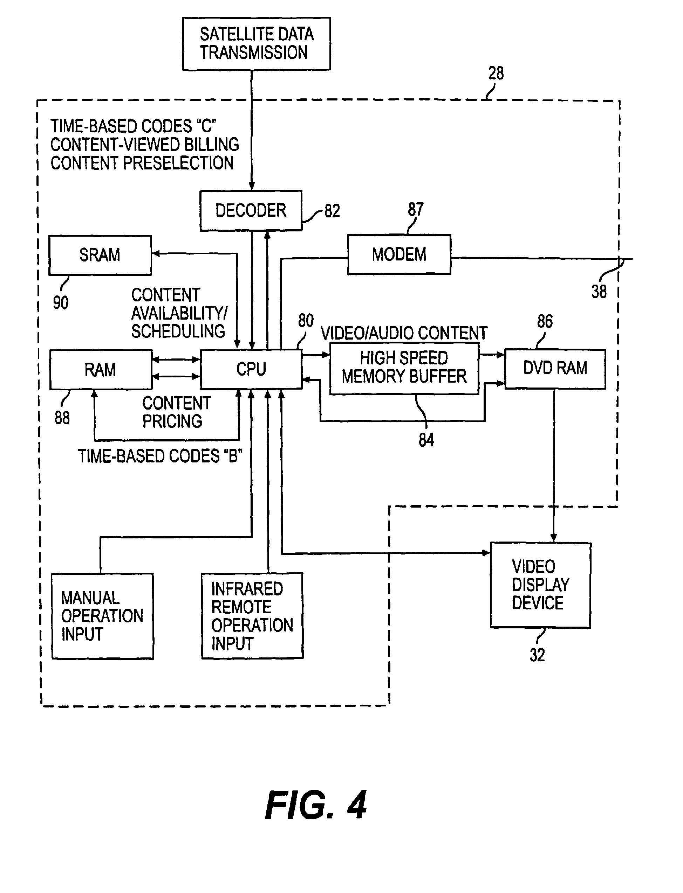

Figure 4 is a block diagram showing components of a representative user station 28 of the invention. The primary controller for station 28 is a central processing unit (CPU) 80 that includes a microprocessor, a non-volatile high speed memory device containing the unit's proprietary operating system, a graphics generator, and additional peripheral devices such as a clock that are common in CPU devices.

Encoded programming data via satellite downlink through antenna 24 is transmitted to a decoder 82. Decoder 82 looks for headers indicating movies or other content that have been preselected for recording. The programming data includes video/audio content data, content availability/scheduling data and content pricing data. Decoded preselected movie data is transmitted via CPU 80 to a high speed memory buffer 84 (with or without high capacity storage capability) and then written to a DVD RAM disc 86 that is associated with the DVD RAM platter 46. In certain embodiments, the high speed memory buffer 84 may utilize a magnetic drive, a magneto-optical drive, an optical drive, or other suitable drive. Buffer 84 may utilize DRAM, flash memory, SRAM or other suitable memory such as digital tape.

As will be appreciated by those skilled in the art, in alternative embodiments the transmitted data may bypass CPU 80.

An internal or external modem 87 connects to a phone line that provides communication to the central controller system 36.

The content availability/scheduling data, content pricing data and time-based security codes B (discussed below) are transmitted at periodic intervals (e.g., every ten minutes, every hour or every day, as deemed most desirable by the video distribution system operator) and are routed from CPU 82 to RAM 88 where the information is stored and available.

Viewed-content information used for billing purposes, content preselection information entered by the user and time-based security key codes C (discussed below) are stored and available in SRAM 90.

CPU 80 directly receives manual and infrared remote operation input data. The video display device 32 receives input from the DVD RAM platter for playback of movies and receives graphics data from CPU 80 for display of the interactive program guide.

It is understood that important aspects of this invention may be provided by different electronics configurations such as a central server to support, and in certain cases to replace, functions carried out by the RAM, SRAM and DVD RAM shown in Figure 4. In addition, SRAM or a suitable high speed memory drive could be used to fulfill the function provided by the RAM (shown in Figure 4). Other embodiments may include an additional disc drive in support of the system data storage and retrieval functions.

### 5. Viewer Interface/Interactive Program Guide

The viewer interface and interactive program guide will now be described in connection with how they permit a customer to review available movies, preselect movies for recording, playback movies for viewing and perform other associated functions.

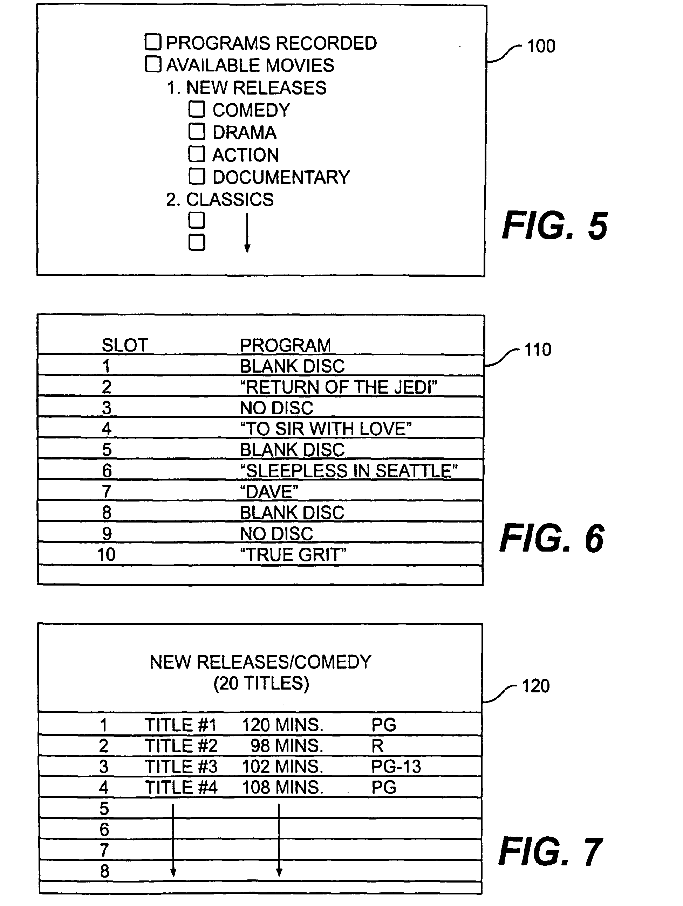

Referring to Figure 5, there is shown a representative screen 100 that is displayed on the video display device 32 when a user initiates use of the system via on/off key 50. By utilizing the four (up/down, left/right) keys of the program selector 54 and by clicking on "Programs Recorded", the user may choose to first determine the status of the multiple (e.g., ten) disc positions in the DVD RAM platter, i.e., what movies are currently recorded and stored in the DVD RAM platter at which disc positions, which disc positions contain blank discs and which disc positions have no discs. Figure 6 shows a representative screen 110 indicating the status of each disc position. Once this information is displayed, the user may elect to playback a movie that is already on the platter, remove disc(s) for storage, etc.

After, or instead of, using the "Programs Recorded" function, the user may use the "Available Movies" function to scroll down through a listing of movies in the interactive program guide that, as shown, may be based on various categories of available movies. For example, the first category of movies is new releases, which may be subdivided into, for example, comedy, action, drama, documentary, etc. After a particular category of movies is chosen (e.g., new releases/comedy) another screen 110 (Figure 7) is displayed showing the titles (in this case twenty titles) in this category. In order to preselect a title for recording, the cursor is moved to the chosen title and the middle key of program selector 54 is pressed twice, the first press showing the current playback price and changing the background color of the display (indicating "selection mode") and the second press completing the selection.

It will be appreciated that the interactive program guide may include links to a short summary of a movie being considered, critical review(s) of the movie or a brief "clip" or preview of the movie. This information may be stored in internal memory, obtained through a link to the website of the video distribution system operator or obtained by direct Internet access to the websites of film producers, movie rating services, etc. (See Figure 2A.) Other suitable means for providing movie information may also be employed.

### 6. Program Security Utilizing Encoding Technology

As mentioned above, in certain embodiments of the invention programming security is best achieved by time-based coding, in combination with the utilization of security codes that are interlaced into the video frames.

The proprietary operating system utilizes standard interlaced encoding data that, as known in the art, prevents movies recorded by a customer at a user station from being played on other nonconforming playback devices (for example, standard DVD playback devices). In addition, recognizing the possibility of pirates utilizing data conversion technology to defeat this security technique so that bootleg copies could be run on other systems, and recognizing the prospect of recorded movies being played on user stations that are not current on payment or are otherwise unauthorized, the invention incorporates a time-based code key to assure that playback of recorded content can only occur on currently authorized user stations.

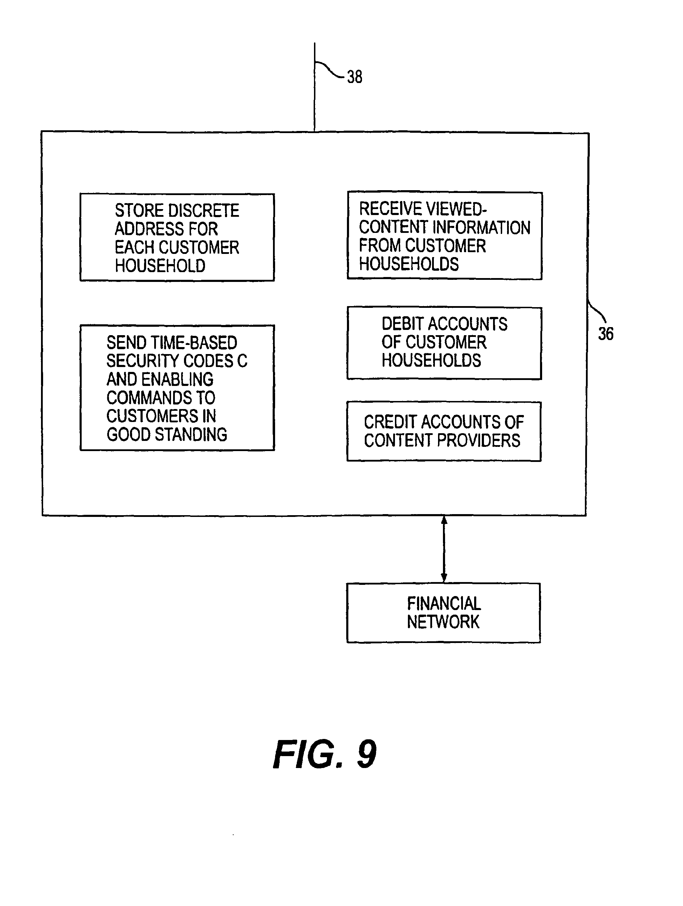

Figure 9 describes one preferred Level I time-based coding format wherein a first code key A comprises a 32-bit monthly code at the beginning of each transmitted movie. With one such code key provided for each month over an extended period of time, say 100 years, there is a total of 12 X 100 = 1200 32-bit code keys A per movie.

A second code key B comprises a 32-bit code for each month chosen by the video distribution system operator at the beginning of each month. Code keys B for all available movies are blanket transmitted to customer households each month by the data transmission means, preferably, satellite.

A third code key C comprises another 32-bit code for each available movie. Code keys C are delivered to each customer household by phone/modem on a monthly basis, preferably at the time of monthly billing queries from the central controller system 36 to the household. The third code keys C are provided only when the customer household is current in payments and otherwise is in good standing.

The time-based coding of Figure 9 assures that a movie will playback at a specific user station only when all three code keys A (transmitted with the movie), B (chosen and blanket transmitted monthly) and C (delivered monthly by phone modem) are present, with the user station software simply verifying that C is the correct value when a predetermined mathematical function is applied to A and B.

Level II security coding comprises a 128-bit code interlaced through every third frame of the movie. This code, in conjunction with the decoding software of the unit's proprietary operating system, is used to assure that recorded movies can be played only on stations provided to consumers by the video distribution system operator. (The players incorporated into the proprietary user stations of the video distribution system simply read and ignore Level II code.)

Thus, recorded movies may not be played back on standard DVD players. However, even if a determined pirate were to defeat the Level II code to produce a disc playable on a standard DVD player, a pirated copy would be useful only until the end of the month, due to Level I time-based coding protection, discussed above.

Optional Level III coding may be utilized to relate Level I and Level II coding in a specific location in each movie over multiple frames where the Level II code is a more complex (e.g., 1024K) program requiring completion from the time-based coding of Level I.

In addition to the security means discussed above, preferably each user station 28 must be in an enabled state. In this regard, an enabling command from central controller system 36 (via phone/modem) may be sent monthly to each customer household that is in good standing.

As an alternative to monthly billing queries by the central controller system 36 to each customer household, monthly provision of code keys C and monthly provision of an enabling command to customer households in good standing, as described above, these functions may be carried out each time a movie is played back for viewing via a two-way communication between central controller system 36 and the customer household. To this end, when a customer initiates playback of a movie through the interactive controls, the playback information (the identity of the movie and the identity of the customer household) is communicated to central controller system 36 by phone/modem, at which time central controller system 36 verifies good standing status for the customer household and sends back a single code key C for the specific movie and an enabling code for the user station. Utilization of this form of communication between a user station and central controller system 36 at the time of every playback offers the advantage of the video distribution system operator not having to send thousands of key codes C (for all available movies) on a monthly basis to each customer household (where the key codes C must be stored in memory) and the further advantage of assuring good standing of the customer household's account prior to each movie playback. A further advantage is that customers' accounts may be billed more currently, at the time of each playback instead of monthly.

As an option to the use of time based security codes as described above, user stations 28 may be provided with speakers (not shown) through which the audio portion of movies must be played, with only signals for the video portion of the movies leaving the user station (to the television or monitor). Thus, even if the video portion of the movie is decoded by a pirate, it will have little value without the audio portion. Likewise, the soundtrack of a movie has little value without the video.

### 7. Central Controller System

Referring to Figure 9, the central controller system 36 will now be discussed in more detail. As discussed above, in one preferred embodiment central controller system 36 provides the following functions:
a. Stores a discrete address for each customer household.
b. Transmits monthly billing query to each customer household to determine which preselected, recorded movies were viewed.
c. Sends monthly transmission of time-based security codes "C" and an enabling command to each customer household that is current in its payments and otherwise is in good standing.
d. Credits accounts of content providers for the use of their content through linkage to a financial network.
e. Debits accounts of customers for movies viewed.

### 8. Alternative Data Transmission Technologies

Referring to Figure 2A, several alternative data transmission technologies may be utilized in place of or in addition to direct broadcast satellite (DBS) which is discussed above.

A first option is data transmission by optical fiber employing suitable technology, preferably an optical fiber technology providing high transmission rates, for example OC3. A single OC3 optical cable transmits data at approximately 128 megabits/sec so that, at VHS resolution, it can transmit approximately sixty movies simultaneously at real speed, or transmit one movie every two minutes at a time-compressed speed.

Other options include cable/modem transmission, Internet connection, other suitable phone connections, or the use of higher or lower frequencies than KU if licensed for satellite-based content transmission, or a combination of any of the transmission means discussed herein.

It will be appreciated that video/audio content transmitted by any of the above means, whether transmitted at real time or at a time-compressed speed, may run in series for simultaneous recording on multiple stations at a consumer household.

### 9. Business Models

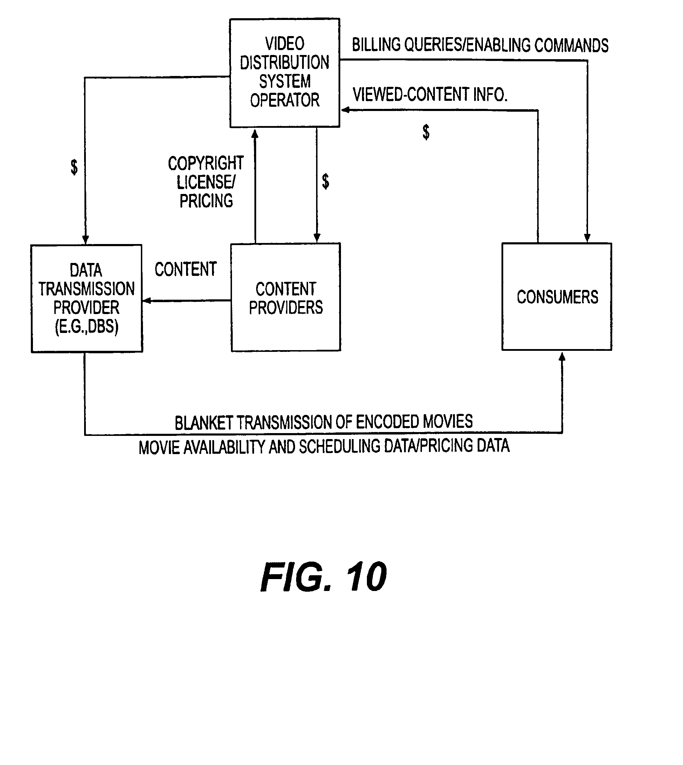

The present invention provides significant flexibility with respect to the business model to be used to commercialize the invention. In one simplified embodiment, shown in block diagram form in Figure 10, the video distribution system operator interfaces with three parties, the data transmission provider, the content providers, and consumers. The content providers provide content to the data transmission provider which, in turn, blanket transmits the content to the consumers, preferably by direct broadcast satellite. The satellite transmission also includes content availability/scheduling data and content pricing data, updated periodically. The content providers also provide copyright license and pricing requirements to the video distribution system operator. Both the data transmission provider and the content providers receive payments directly from the video distribution system operator. Lastly, the video distribution system operator periodically receives viewed-content information for billing, while also sending enabling commands to the consumers.

Other business models may utilize time-based security coding as discussed above. Also, the Internet may be used to provide centrally posted content availability information and permit preselection of movies for recording at the customer's household.

### EXAMPLE I

The video distribution system of the present invention is implemented using the business model of Figure 10, the DISH 500 DBS system, and the other hardware and software systems described above and illustrated in the drawing figures.

The video/audio content provided by the video distribution system is transmitted in real time (i.e., not time-compressed -- average movie 110 minutes). The movies are blanket broadcast utilizing approximately 49% of the total capacity of the DISH 500 system, with transmission times heavily weighted for Tier 2, 3 and 4 movies to off-peak broadcast hours (e.g., 1:00 am - 8:00 am).

### Movie "Hierarchy"

- Tier 1:: The current 100 new release movies from major studios.
- Tier 2:: The 6000 movies that are at the second level of consumer demand after the Tier 1 new release movies.
- Tier 3:: The 8000 movies at the third level of consumer demand.
- Tier 4:: 60,000 additional movies.

### Transmission Schedule

- Tier 1:: Each new release movie is transmitted every day on the hour from 4:30 pm to 8:30 pm, and at several other times daily.
- Tier 2:: Each Tier 2 movie is transmitted once per day.
- Tier 3:: Each Tier 3 movie is transmitted once per week.
- Tier 4:: Each Tier 4 movie is transmitted once per month.

A consumer who wishes to plan ahead can easily record all new releases in the "comedy" category, for example, and have them available for viewing at his pleasure, with payment obligations arising only for those movies he actually views, when he views them. The same consumer or another consumer wishing to view a new release on the evening at which the viewing decision is made, simply preselects the movie for recording any time during the day so that it will be available during the evening viewing hours. An Internet phone/modem connection (not shown) may be provided so that consumers may access their user stations from remote locations (e.g., from their business offices) to preselect movies for viewing that evening.

The term "movies" as used in connection with the Examples, and as used at other times herein, encompasses more than the term traditionally implies. The term "movies" may encompass not only motion pictures and similar content, but also certain content that appears in the lower tiers, especially Tier 4, such as classic sporting events (e.g., all Super Bowls) and popular TV series (e.g., all episodes of *Star Trek* or *Sienfeld* or *I Love Lucy).* In this regard, a customer who wishes to do so may record all episodes of *I Love Lucy* (transmitted monthly in Tier 4) on a multiple disc platter, store the discs and playback selected episodes any time he desires, paying only when he views an episode or episodes.

### EXAMPLE II

The video distribution system of Example II is implemented with the same tiers of movies as Example I with the difference being that the Tier 1 movies are transmitted in compressed time format to a high speed memory buffer contained in the user station which, in turn, writes to the DVD RAM disc at its maximum write speed. This compressed time transmission (e.g., 8 to 10 minutes per movie) permits consumers to have movies, particularly Tier 1 movies, available on short notice, often in a time less than or on the order of that time required for a round trip to a video rental store. To further facilitate this enhanced availability of movies on short notice, according to Example II Tier 1 new release movies are transmitted every 30 minutes from 5:30 pm to 8:30 pm, and at several other times daily.

### EXAMPLE III

Same as Example II except that all movies are transmitted in compressed time format.

### EXAMPLE TV

The video distribution system of this Example IV is implemented with the same tiers of movies as Examples I-III. According to Example IV, the recording and playback device of user station 28 comprises a magneto-optical disc recording and playback device that has the capacity to write to a magneto-optical disc at write speeds on the order of 12 megabits/sec or greater, a write speed that is approximately 8 to 10 times the data stream speed for conventional VHS resolution video/audio transmission and playback (with conventional MPEG II compression). Utilizing an approximately 12 megabit/sec write speed, and a corresponding data transmission speed via DBS or other suitable transmission means, a movie may be transmitted in time-compressed format and recorded at 8 to 10 times real time, so that a 110 minute movie may be transmitted and recorded in approximately 11 to 14 minutes or less.

In order to provide ready consumer access to new-release movies, each of the 100 Tier 1 movies is broadcast from 6:00 p.m. to 9:00 p.m., at 15 minute intervals. Thus, during these prime time hours, a consumer may select any Tier 1 movie and have it available for viewing within 15 to 30 minutes. (With faster transmission and write speeds the Tier 1 movie availability time period may be reduced accordingly.) As with Example II, the Tier 1 movies are also transmitted at several other times daily, for example, hourly.

According to Example IV, Tier 2, 3 and 4 movies are also transmitted and written to discs in compressed time, for example, at approximately 12 megabits/sec or greater.

### EXAMPLE V

The distribution systems described in Examples I-IV have the capability to transmit audio in compact disc (CD) quality or another form to a suitable storage medium such as read/write CD's, write only CD's, DVD RAM, magneto-optical disc, digital tape or a central server. In this Example V, the consumer may choose any music selection from up to as many as 80,000 or more titles in a tiered transmission structure similar to Examples I-IV and use less than 10% of the existing DBS transmission capacity.

With music distribution under this Example V, the system allows the user to listen to the recording (e.g., CD) several times for free before the consumer is required to permanently select the CD. Once permanently selected, the CD receives a permanent enabling code and the consumer pays a one time fee -- similar to the current one-time fee structure which is standard in the existing music distribution business model. The player then plays the CD through TV speakers or provides an audio output to an optional external audio system (Figure 2A). This music distribution model eliminates a significant portion of the labor, real estate and transportation costs inherent in the current distribution models for music, much as the novel movie distribution model described herein eliminates costs in the distribution of movies as compared to current models. The music distribution model of this Example V may utilize DBS or the alternative data transmission means described above, either alone or in combination.

### EXAMPLE VI

The distribution system of Example IV is augmented with CD quality music transmission capability where 10,000 titles per day are transmitted at a time-compressed speed of, for example, 12 megabits/sec or greater. The music transmission of this Example VI may be carried out by utilizing additional DBS capacity, by reducing the number of Tier 2 movies transmitted daily, by reducing movie transmission in other tiers, or by a combination of the above. As described above in connection with Example V, the customer may listen to the recording several times for free after the encoded transmission is stored (with or without the use of memory buffer 84), before the purchase selection. Once the purchase selection is made, the recording preferably is written to a conventional CD so that it may be played back on conventional home or auto playback devices. To this end, the user station 28 may include positions for holding and writing to conventional CD's -- in addition to the ability to write to another medium such as DVD RAM or magneto-optical discs used for storage of movies. In the alternative, once the recording is selected, it may be routed to the external audio system (Figure 2A) which has its own CD read/write or write only device that will permanently write the selected recording to a CD that can be held in a single, stack or platter system.

### 10. Music Only Distribution Systems

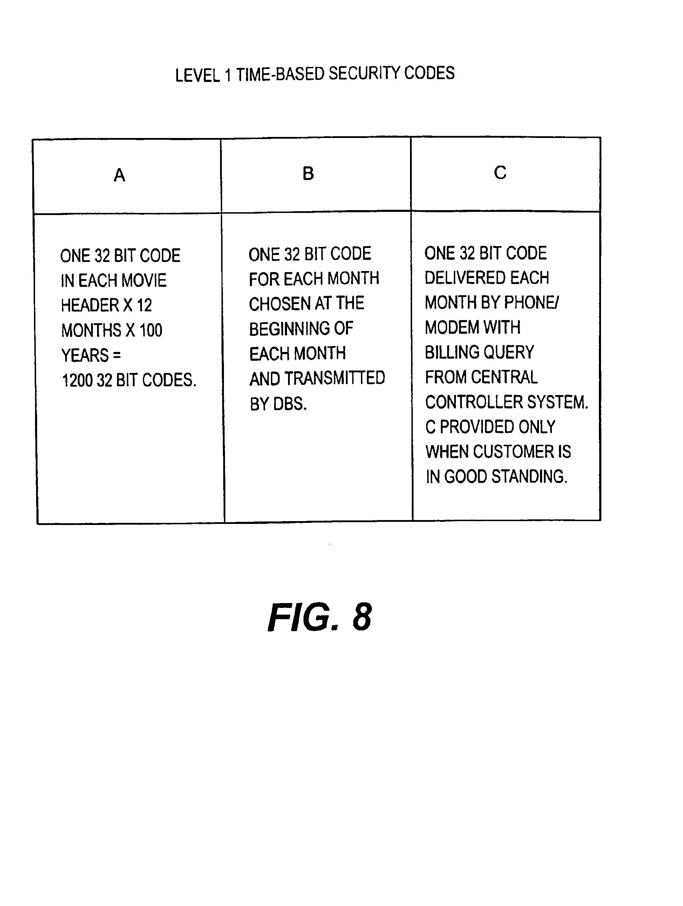

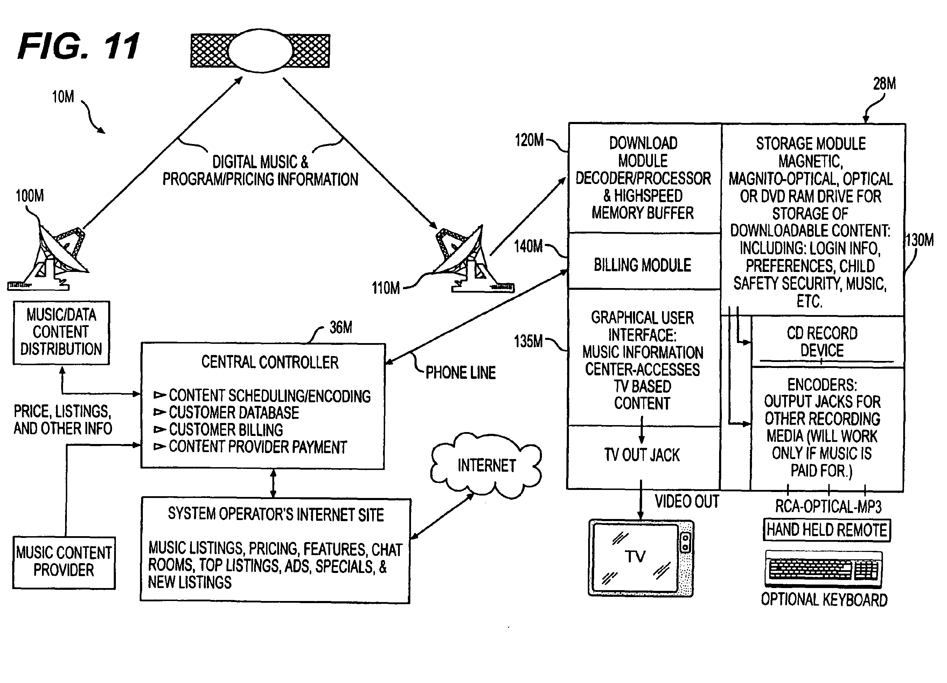

The description will now turn to a discussion of music only distribution systems that operate under the principles of the invention. Figure 11 shows a music distribution system 10M that is comparable in function to the counterpart video distribution system 10 described above in connection with Figures 1-10.

More specifically, music content providers deliver music in digital form to the central controller 36M of the music distribution system.

The content is encoded utilizing an encoding technology that is well known in the art, such as interlaced coding techniques in combination with a unique header code that identifies each title. In certain embodiments, only the unique header coding is employed to identify each specific title. It is also understood that the header code can also identify the exact transmission time of each title. The header code containing transmission times can be digitally communicated to the operating system of the user stations 28M to prevent unauthorized reception and subsequent duplication of digital music content. In addition, it is also understood that selection of a specific title by the user can require a completed payment before activation of initial reception and storage of the digital music content, or before the digital music content is recorded on any other device or media.

The encoded music content is scheduled and transmitted to the direct broadcast satellite up-link facility 100M by the system operator through central controller 36M. In addition, periodic digital program/pricing information is transmitted to the up-link facility, for example, every ten minutes. While it is understood that direct broadcast satellite transmission currently operates in the KU Band, other frequencies can also be employed to achieve similar results. It is understood that the music content can be transmitted at real or time compressed speeds. In preferred embodiments, music content is transmitted at faster than real time speeds, where real time speeds refer to the playback speed of the recorded music. For example, a single satellite transponder capable of 23 megabits/sec transmission can transmit a typical 4 minute song in less than 4 seconds. Thus, EchoStar's DBS programming capacity (discussed above) allows transmission of 400,000 to 500,000 song titles (approximately 30,000 to 40,000 CD's) during a four hour period, most preferably curing a period of low viewership, e.g., 1:00 AM to 5:00 AM.

The digital music content and program/pricing information, once received by the appropriate satellite, are then transmitted down broadly (i.e., "blanket transmitted") to geographic coverage areas where the user stations can receive the downlink transmissions.

The music program and pricing information are received by the home user's satellite dish 110M and transmitted to download module 120M contained in the user station where it is decoded and stored digitally in storage module 130M also contained in the user station.

The user preselects music content to be downloaded by selecting the content utilizing the graphical user interface 135M shown on the TV screen. Pricing information for the preselected music content is then transmitted to the billing module 140M contained in the user station where it is stored in nonvolatile memory such as SRAM for subsequent querying via the phone line by central controller 36M.

In certain embodiments, the user station 28M will also contain an audio speaker system (not shown) to allow the user to listen to the stored music before it is recorded permanently on a CD or other recordable medium and subsequently paid for. In this embodiment, the preselected pricing information stored in billing module 140M will not be transmitted for payment to the system operator until the user has either listened to the music content a set number of times, for example, 3 times, or the user indicates via the graphical user interface that he wishes to permanently record it.

The music content preselected by the user utilizing the graphical user interface is received by the home user's satellite dish 110M and transmitted to download module 120M where it is decoded and stored digitally in storage module 130M.

The graphical user interface prompts the user to insert a recordable medium such as a writeable CD into the user station, or attach other recording device to the user station's output connectors. In certain cases, the user may choose to pay and record preselected music content multiple times. In such cases the music content provider may offer pricing discounts for multiple recordings.

The user station records the preselected music content stored in the user station and deletes the music contained in storage module 130M once the recording has been completed.

The user accesses (or navigates) the graphical user interface via a hand held remote similar to the one shown in Figure 3. In preferred embodiments, the remote control communicates via infrared LED transmitter to an infrared sensor contained on the user station. An optional keyboard can be utilized by the user to access (or navigate) the graphical user interface via the same infrared sensor contained on the user station.

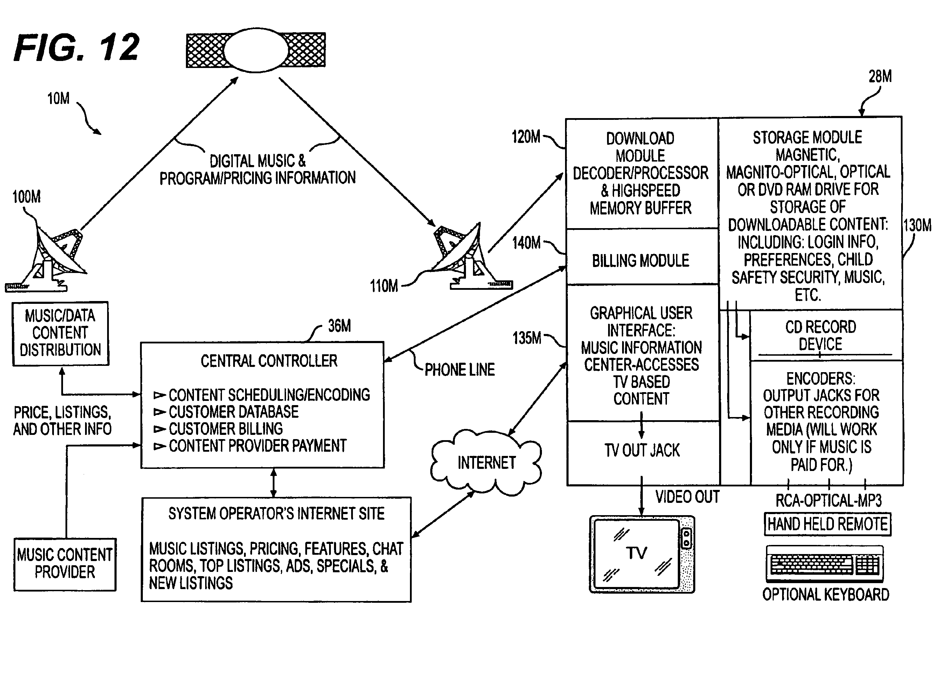

Figure 12 illustrates another embodiment wherein the user station contains an Internet browser and processor that enables the station to access the system operator's music Internet site via phone line or other Internet connection.

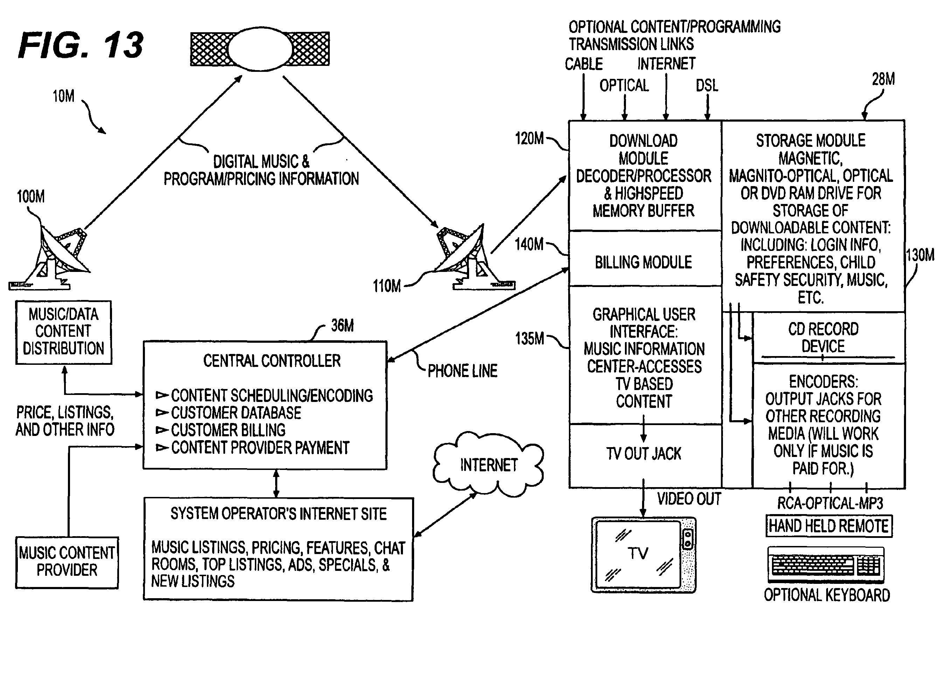

Optional digital content/programming transmission links are shown in Figure 13. These include, but are not limited to, cable, optical fiber, DSL and the Internet.

While the present invention has been described in connection with certain illustrated embodiments, it will be appreciated that modifications may be made without departing from the invention. For example, the term "video display device" has been used herein in its broadest sense to refer to any suitable video imaging system, such as a television, computer monitor, plasma screen, LED display, liquid crystal display, 3D imaging system, or the like, understanding that an appropriate audio capability is provided. Also, while a DVD RAM platter system has been described as one preferred recording and playback device, both at real time and time-compressed transmission speeds and write speeds to the discs, other systems may be used, alone or in combination, such as magneto-optical disc, digital tape, VHS tape, a central or auxiliary server (optical, magnetic or magneto-optical). The discrete storage media of any one of these alternative devices may be arranged in a platter or stack or other suitable format to provide the user access to multiple stored audio/video content stored thereon.

## Claims

1. A method comprising:
■ transmitting (20, 24, 30) a plurality of movies together to a plurality of consumer locations;
■ pre-selecting (32, 54, 100, 140) desired movies from a list of available content at said consumer locations; and
■ billing a consumer location within the plurality of consumer locations once a movie that has been preselected and then recorded at the consumer location are played back for viewing;
■ wherein a code key A specific for each movie is transmitted with each movie;
■ wherein a code key B is blanket transmitted at periodic time intervals;
■ wherein a code key C is delivered at periodic time intervals or each time the movie is played back for viewing; and
■ wherein a customer can only view a movie if all three code keys A, B and C have been received, and user station software verifies that C is the correct value when a predetermined mathematical function is applied to A and B.

2. The method of claim 1, further comprising encoding the transmitted movies with data permitting playback only on a playback device with compatible decoder.

3. The method of claim 2, further comprising communicating movie playback information from each consumer location to a central controller system (36) when the code keys C are provided.

4. The method of one of the preceding claims, wherein the act of transmitting a plurality of movies is carried out by a direct broadcast satellite transmission (20, 24, 30) on multiple channels in compressed-time format.

5. A device (28) comprising:
■ a receiving mechanism (82, 80, 84, 86) configured to receive a plurality of pre-selected movies (20, 24, 30);
■ an identification mechanism (32, 54, 100, 140) configured to identify movies within the plurality of transmitted movies received by the receiving mechanism (82, 80, 84, 86) as those previously selected by a particular consumer location associated with the video recording device;
■ a recording mechanism (84, 86) configured to record said previously selected movies once identified by the identification mechanism;
■ a playback mechanism configured to playback recorded previously selected movies upon selection for playback by a user; and
■ a billing mechanism (36) in communication with the playback mechanism configured to transmit billing information to a central billing system accounting for each time the previously selected movie has been selected for playback;
■ a mechanism for receiving a code key A specific for each movie, a code key B which is blanket transmitted at periodic time intervals and a code key C which is delivered at periodic time intervals or each time the movie is played back for viewing; and
■ a control mechanism in communication with the receiving mechanism (82, 80, 84, 86) configured to verify the received combination of said code keys for authorizing play-back of said transmitted movies at a desired time, and enabling said playback if all three code keys A, B and C have been received, and user station software verifies that C is the correct value when a predetermined mathematical function is applied to A and B.

6. The device (28) of claim 5, wherein the billing mechanism (36) comprises:
■ a mechanism configured to communicate an identity of said previously selected movie and a unique identifying address associated with said consumer to a central billing system upon initiating play-back of the previously selected movie; and
■ a playback-enabling mechanism configured to receive from said central billing system the third code key C for identifying a status of said consumer to enable said play-back of said previously selected movie.

7. A system (10) comprising:
■ a transmitting mechanism configured to transmit (20, 24, 30) a plurality of movies together to a plurality of consumer locations;
■ an interactive screen selector (32, 54, 100, 140) for pre-selecting of movies from a list of available content in advance (32, 54, 100, 140);
■ a billing mechanism (36) configured to bill a consumer location within the plurality of consumer locations once a movie that has been pre-selected and then recorded at the consumer location are played back for viewing;
■ a mechanism for receiving a code key A specific for each movie, a code key B which is blanket transmitted at periodic time intervals and a code key C which is delivered at periodic time intervals or each time the movie is played back for viewing; and
■ a control mechanism in communication with the receiving mechanism (82, 80, 84, 86) configured to verify the received combination of said code keys for authorizing play-back of said transmitted movies at a desired time, and enabling said playback if all three code keys A, B and C have been received ;
■ a user station software verifying that C is the correct value when a predetermined mathematical function is applied to A and B.

8. The system (10) of claim 7, further comprising:
■ an encoding means configured to encode the transmitted movies with data permitting playback only on a playback device with compatible decoder (82).

9. The system (10) of claim 8, further comprising:
■ an encoder configured to encode the transmitted movies with code key A specific for each movie.

10. The system (10) of claim 9, wherein the transmitting mechanism is configured to carry out transmission via direct broadcast satellite (20, 24, 30) on multiple channels in compressed-time format.

## Patentansprüche

1. Verfahren, aufweisend:
■ Übertragen (20, 24, 30) einer Mehrzahl von Filmen zusammen an eine Mehrzahl von Verbraucher-Standorten,
■ Vor-Auswählen (32, 54, 100, 140) von gewünschten Filmen aus einer Liste von verfügbarem Inhalt an den Verbraucher-Standorten, und
■ Fakturieren eines Verbraucher-Standorts innerhalb einer Mehrzahl von Verbraucher-Standorten, sobald ein am Verbraucher-Standort vor-ausgewählter und anschließend aufgezeichneter Film zum Ansehen abgespielt wird,
■ wobei mit jedem Film ein für jeden Film spezifischer Codeschlüssel A übertragen wird,
■ wobei ein Codeschlüssel B in regelmäßigen Zeitintervallen rundübertragen wird,
■ wobei ein Codeschlüssel C in regelmäßigen Zeitintervallen oder jedes Mal, wenn der Film zum Ansehen abgespielt wird, übertragen wird, und
■ wobei ein Verbraucher einen Film nur dann ansehen kann, wenn alle drei Codeschlüssel A, B und C empfangen wurden, und wenn eine Teilnehmer-Standort-Software verifiziert, dass C der korrekte Wert ist, wenn eine vorbestimmte mathematische Funktion auf A und B angewendet wird.

2. Verfahren gemäß Anspruch 1, das ferner das Codieren der übertragenen Filme mit Daten aufweist, die das Abspielen nur auf einer Abspiel-Vorrichtung mit einem kompatiblen Decoder erlauben.

3. Verfahren gemäß Anspruch 2, das ferner das Übermitteln von Film-Abspiel-Information von jedem Verbraucher-Standort an ein zentrales Steuerungs-System (36) aufweist, wenn die Codeschlüssel C bereitgestellt werden.

4. Verfahren nach einem der vorhergehenden Ansprüche, wobei der Vorgang des Übermittelns einer Mehrzahl von Filmen durch eine Direkt-Ausstrahlungs-Satelliten-Übertragung (20, 24, 30) auf Mehrfachkanälen in komprimiertem Zeitformat ausgeführt wird.

5. Vorrichtung (28), aufweisend:
■ einen Empfangsmechanismus (82, 80, 84, 86), der für das Empfangen einer Mehrzahl von vor-ausgewählten Filmen (20, 24, 30) konfiguriert ist,
■ einen Identifikationsmechanismus (32, 54, 100, 140), der für das Identifizieren von Filmen innerhalb der Mehrzahl von übertragenen, von dem Empfangsmechanismus (82, 80, 84, 86) empfangenen Filmen als die zuvor von einem bestimmten mit der Video-Aufzeichnungsvorrichtung verknüpften Benutzer-Standort ausgewählten Filme konfiguriert ist,
■ einen Aufzeichnungsmechanismus (84, 86), der für das Aufzeichnen der zuvor ausgewählten Filme konfiguriert ist, sobald diese von dem Identifikationsmechanismus identifiziert wurden,
■ einen Abspielmechanismus, der für das Abspielen von aufgezeichneten zuvor ausgewählten Filmen konfiguriert ist, sobald ein Benutzer Abspielen ausgewählt hat, und
■ einen mit dem Abspielmechanismus kommunizierenden Abrechnungsmechanismus (36), der für das Übertragen von Abrechnungsinformation an ein zentrales Abrechnungssystem konfiguriert ist, das jedes Mal berechnet, wenn der zuvor ausgewählte Film zum Abspielen ausgewählt wurde,
■ einen Mechanismus zum Empfangen eines für jeden Film spezifischen Codeschlüssels A, eines Codeschlüssels B, der in regelmäßigen Zeitintervallen rundübertragen wird, und eines Codeschlüssels C, der in regelmäßigen Zeitintervallen oder jedes Mal, wenn ein Film zum Ansehen abgespielt wird, übermittelt wird, und
■ einen mit dem Empfangs-Mechanismus (82, 80, 84, 86) kommunizierenden Steuerungs-Mechanismus, der für das Verifizieren der empfangenen Kombination der Codeschlüssel zum Autorisieren des Abspielens der übertragenen Filme zu einer gewünschten Zeit konfiguriert ist, und der das Abspielen ermöglicht, wenn alle drei Codeschlüssel A, B und C empfangen wurden, und die Teilnehmer-Standort-Software verifiziert, dass C der korrekte Wert ist, wenn eine vorbestimmte mathematische Funktion auf A und B angewendet wird.

6. Vorrichtung (28) gemäß Anspruch 5, wobei der AbrechnungsMechanismus (36) aufweist:
■ einen Mechanismus, der für die Übermittlung einer Identität des zuvor ausgewählten Films und einer einzigartigen, mit dem Verbraucher verknüpften Identifikations-Adresse an ein zentrales Abrechnungs-System bei Initiierung des Abspielens des zuvor ausgewählten Films konfiguriert ist, und
■ einen das Abspielen ermöglichenden Mechanismus, der für den Empfang des dritten Codeschlüssels C von dem zentralen Abrechnungs-System konfiguriert ist, um einen Status des Verbrauchers zu identifizieren, um das Abspielen des zuvor ausgewählten Films zu ermöglichen.

7. System (10), aufweisend:
■ einen Übertragungs-Mechanismus, der für das Übertragen (20, 24, 30) einer Mehrzahl von Filmen zusammen an eine Mehrzahl von Verbraucher-Standorten konfiguriert ist,
■ eine interaktive Bildschirm-Auswahlvorrichtung (32, 54, 100, 140) zum Vor-Auswählen von Filmen aus einer Liste von verfügbarem Inhalt im Voraus (32, 54, 100, 140),
■ einen Abrechnungsmechanismus (36), der für das Fakturieren eines Verbraucher-Standorts in einer Mehrzahl von Verbraucher-Standorten konfiguriert ist, sobald ein an dem Verbraucher-Standort vor-ausgewählter und anschließend aufgezeichneter Film zum Ansehen abgespielt wird,
■ einen Mechanismus zum Empfangen eines für jeden Film spezifischen Codeschlüssels A, eines Codeschlüssels B, der in regelmäßigen Zeitintervallen rundübertragen wird, und eines Codeschlüssels C, der in regelmäßigen Zeitintervallen oder jedes Mal, wenn der Film zum Ansehen abgespielt wird, übermittelt wird, und
■ einen mit dem Empfangs-Mechanismus (82, 80, 84, 86) kommunizierenden Steuerungs-Mechanismus, der für das Verifizieren der empfangenen Kombination der Codeschlüssel zum Autorisieren des Abspielens der übertragenen Filme zu einem gewünschten Zeitpunkt konfiguriert ist, und der das Abspielen ermöglicht, wenn alle drei Codeschlüssel A, B und C empfangen wurden,
■ eine Verbraucher-Standort-Software, die verifiziert, dass C der korrekte Wert ist, wenn eine vorbestimmte mathematische Funktion auf A und B angewendet wird.

8. System (10) gemäß Anspruch 7, ferner aufweisend:
■ ein Codierungs-Mittel, das für das Codieren der übertragenen Filme mit Daten, die ein Abspielen nur auf einer Abspiel-Vorrichtung mit einem kompatiblen Decoder (82) erlauben, konfiguriert ist.

9. System (10) gemäß Anspruch 8, ferner aufweisend:
■ einen Codierer, der für das Codieren der übertragenen Filme mit einem für jeden Film spezifischen Codeschlüssel A konfiguriert ist.

10. System (10) gemäß Anspruch 9, wobei der Übertragungs-Mechanismus für das Ausführen der Übertragung über Direkt-Ausstrahlungs-Satelliten (20, 24, 30) auf Mehrfachkanälen in komprimiertem Zeitformat konfiguriert ist.

## Revendications

1. Procédé comprenant :
■ la transmission (20, 24, 30) d'une pluralité de films conjointement à une pluralité d'emplacements de consommateurs ;
■ la présélection (32, 54, 100, 140) de films souhaités à partir d'une liste de contenus disponibles auxdits emplacements de consommateurs ; et
■ la facturation d'un emplacement de consommateur dans la pluralité d'emplacements de consommateurs une fois qu'un film qui a été présélectionné et ensuite enregistré à l'emplacement de consommateur est diffusé pour la vision ;
■ dans lequel une clé de code A spécifique pour chaque film est transmise avec chaque film ;
■ dans lequel une clé de code B est transmise masquée à des intervalles de temps périodiques ;
■ dans lequel une clé de code C est délivrée à des intervalles de temps périodiques ou chaque fois que le film est diffusé pour la vision ; et
■ dans lequel un client peut seulement voir un film si toutes les trois clés de code A, B et C ont été reçues et le logiciel du poste d'utilisateur vérifie que C est la valeur correcte lorsqu'une fonction mathématique prédéterminée est appliquée à A et B.

2. Procédé selon la revendication 1, comprenant, en outre, le codage des films transmis avec des données permettant la diffusion seulement sur un dispositif de diffusion avec un décodeur compatible.

3. Procédé selon la revendication 2, comprenant, en outre, la communication d'informations de diffusion de film à partir de chaque emplacement de consommateur à un système de commande central (36) quand les clés de code C sont fournies.

4. Procédé selon l'une des revendications précédentes, dans lequel le fait de transmettre plusieurs films est mis en oeuvre par une transmission de satellites de radio-diffusion directe (20, 24, 30) sur de multiples canaux dans un format à temps comprimé.

5. Dispositif (28) comprenant:
■ un mécanisme de réception (82, 80, 84, 86) configuré pour recevoir une pluralité de films présélectionnés (20, 24, 30) ;
■ un mécanisme d'identification (32, 54, 100, 140) configuré pour identifier les films dans la pluralité de films transmis reçus par le mécanisme de réception (82, 80, 84, 86) comme ceux préalablement sélectionnés par un emplacement de consommateur particulier associé au dispositif d'enregistrement vidéo ;
■ un mécanisme d'enregistrement (84, 86) configuré pour enregistrer lesdits films préalablement sélectionnés une fois qu'ils sont identifiés par le mécanisme d' identification ;
■ un mécanisme de diffusion configuré pour diffuser les films sélectionnés préalablement enregistrés lors de la sélection pour la diffusion par un utilisateur ; et
■ un mécanisme de facturation (36) en communication avec le mécanisme de diffusion configuré pour transmettre l'information de facturation à un système de facturation central prenant en compte chaque fois que le film préalablement sélectionné a été sélectionné pour la diffusion ;
■ un mécanisme pour la réception d'une clé de code A spécifique pour chaque film, une clé de code B qui est transmise masquée à des intervalles de temps périodiques et une clé de code C qui est délivrée à des intervalles de temps périodiques ou à chaque moment que le film est diffusé pour la vision ; et
■ un mécanisme de commande en communication avec le mécanisme de réception (82, 80, 84, 86) configuré pour vérifier la combinaison reçue desdites clés de code pour autoriser la diffusion desdits films transmis à un moment souhaité et permettre ladite diffusion si toutes les trois clés de code A, B et C ont été reçues et le logiciel du poste de l'utilisateur vérifie que C est la valeur correcte quand une fonction mathématique prédéterminée est appliquée à A et B.

6. Dispositif (28) selon la revendication (5) dans lequel le mécanisme de facturation (36) comprend :
■ un mécanisme configuré pour communiquer une identité dudit film préalablement sélectionné et une adresse d'identification unique associée audit consommateur à un système de facturation central lors du début de la diffusion du film préalablement choisi ; et
■ un mécanisme permettant une diffusion configuré pour recevoir à partir dudit système de facturation central la troisième clé de code C pour identifier un statut dudit consommateur pour permettre ladite diffusion dudit film préalablement sélectionné.

7. Système (10) comprenant :
■ un mécanisme de transmission configuré pour transmettre (20, 24, 30) une pluralité de films conjointement à une pluralité d'emplacements de consommateurs ;
■ un sélecteur d'écran interactif (32, 54, 100, 140) pour présélectionner des films à partir d'une liste de contenus disponibles à l'avance (32, 54, 100, 140) ;
■ un mécanisme de facturation (36) configuré pour facturer un emplacement de consommateur dans la pluralité d'emplacements de consommateurs une fois qu'un film qui a été présélectionné et ensuite enregistré à l'emplacement du consommateur est diffusé pour la vision ;
■ un mécanisme pour recevoir une clé de code A spécifique pour chaque film, une clé de code B qui est transmise masquée à des intervalles de temps périodiques et une clé de code C qui est délivrée aux intervalles de temps périodiques ou à chaque moment que le film est diffusé pour la vision ; et
■ un mécanisme de commande en communication avec le mécanisme de réception (82, 80, 84, 86) configuré pour vérifier la combinaison reçue desdites clés de code pour autoriser la diffusion desdits films transmis à un moment souhaité et permettre ladite diffusion si toutes les trois clés de code A, B et C ont été reçues ;
■ un logiciel de poste d'utilisateur vérifiant que C est la valeur correcte lorsqu'une fonction mathématique prédéterminée est appliquée à A et B.

8. Système (10) selon la revendication 7, comprenant, en outre :
■ un moyen de codage configuré pour coder les films transmis avec les données permettant la diffusion seulement sur un dispositif de diffusion avec un décodeur compatible (82).

9. Système (10) selon la revendication 8, comprenant, en outre :
■ un codeur configuré pour coder les films transmis avec la clé de code A spécifique pour chaque film.

10. Système (10) selon la revendication 9, dans lequel le mécanisme de transmission est configuré pour mettre en oeuvre une transmission par l'intermédiaire d'un satellite de radiodiffusion directe (20, 24, 30) sur de multiples canaux dans un format à temps comprimé.
